(19) Europäisches Patentamt
European Patent Office
Office européen des brevets

(11) **EP 2 038 638 B1**

(12) **FASCICULE DE BREVET EUROPEEN**

(45) Date de publication et mention
de la délivrance du brevet:
**15.05.2019 Bulletin 2019/20**

(21) Numéro de dépôt: **07803825.4**

(22) Date de dépôt: **02.07.2007**

(51) Int Cl.:
***G01N 21/55*** *(2014.01)*  ***G08G 1/0962*** *(2006.01)*
***G01N 21/21*** *(2006.01)*

(86) Numéro de dépôt international:
**PCT/FR2007/001116**

(87) Numéro de publication internationale:
**WO 2008/003852 (10.01.2008 Gazette 2008/02)**

(54) **DISPOSITIF D'ÉVALUATION DE L'ÉTAT DE MOUILLAGE D'UNE SURFACE, PROCÉDÉ D'ÉVALUATION ET DISPOSITIF D'INDICATION ASSOCIÉ**

VORRICHTUNG ZUR BEURTEILUNG DES BENETZUNGSZUSTANDES EINER OBERFLÄCHE, BEURTEILUNGSVERFAHREN UND ENTSPRECHENDES ANZEIGEVERFAHREN

DEVICE FOR EVALUATING THE STATE OF WETTING OF A SURFACE, EVALUATION METHOD AND ASSOCIATED INDICATION DEVICE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **07.07.2006 FR 0606234**

(43) Date de publication de la demande:
**25.03.2009 Bulletin 2009/13**

(73) Titulaires:
• **Centre National de la Recherche Scientifique**
**75016 Paris (FR)**
• **UNIVERSITE DE POITIERS**
**86034 Poitiers Cedex (FR)**

(72) Inventeurs:
• **BROCHARD, Jacques**
**86130 Jaunay Clan (FR)**
• **KHOUDEIR, Majdi**
**86000 Poitiers (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
EP-A- 1 207 370    DE-C1- 4 300 896
JP-A- 10 206 314    JP-A- 60 015 532
JP-A- 2004 301 708    JP-A- 2005 043 240
JP-A- 2006 058 122

**Description**

La présente invention concerne un dispositif d'évaluation de l'état de mouillage d'une surface du type comportant au moins un émetteur propre à émettre au moins un faisceau lumineux incident en direction de la surface, la surface étant apte à réfléchir au moins en partie ledit faisceau et un moyen unique de réception du faisceau réfléchi par ladite surface.

Il est connu des dispositifs d'évaluation de l'état de mouillage d'une surface basés sur les propriétés d'absorption spécifique de l'eau pour des rayonnements situés dans le proche infrarouge. Toutefois, ces dispositifs sont inadaptés pour des niveaux de mouillage faibles ou très faibles.

L'invention a pour but de proposer un dispositif alternatif d'évaluation de l'état de mouillage d'une surface.

A cet effet, l'invention a pour objet un dispositif d'évaluation selon la revendication 1.

L'invention a également pour objet un procédé d'évaluation de l'état de mouillage d'une surface selon la revendication 7.

L'invention a également pour objet un dispositif d'indication de l'état de mouillage d'une route pour véhicule automobile circulant sur cette route, le véhicule comportant des moyens d'émission/réception, caractérisé en ce qu'il comprend :

- des moyens de commande comportant :

  - des moyens de connexion aux moyens d'émission/réception du véhicule pour transmettre une demande de caractérisation du type de la route à un serveur à distance et à réceptionner ledit type ;
  - une cartographie définissant des valeurs de seuils de polarisation, de seuils de densité de mouillage primaire et de seuils de densité de mouillage secondaire en fonction de différents types de route ;
  - des moyens de sélection dans la cartographie d'au moins une desdites valeurs en fonction du type de route réceptionné par les moyens d'émission/réception ; et
  - des moyens de transmission de la ou de chaque valeur sélectionnée à un dispositif d'évaluation ;

- un dispositif d'évaluation de l'état de mouillage selon les caractéristiques mentionnées ci-dessus comprenant un seuil de polarisation prédéfini, un seuil de densité de mouillage primaire prédéfini et un seuil de densité de mouillage secondaire prédéfini, le dispositif étant propre à recevoir la ou chaque valeur sélectionnée par les moyens de commande, et à modifier la ou chaque valeur prédéfinie par la ou chaque valeur reçue.

L'invention sera mieux comprise à la lecture de la description qui va suivre, donnée uniquement d'exemple et faite en se référant aux dessins, sur lesquels :

- la figure 1 est une vue schématique d'un exemple d'un dispositif ;
- la figure 2 est une vue schématique de face d'une image obtenue par le dispositif d'évaluation ;
- la figure 3 est une vue schématique de face d'une image obtenue par une variante du dispositif d'évaluation
- la figure 4 est un diagramme représentant les étapes du procédé d'évaluation ;
- la figure 5 est une vue schématique du dispositif d'évaluation selon un second mode de réalisation de l'invention ; et
- la figure 6 est une vue schématique d'un dispositif d'indication de l'état de mouillage d'une route pour véhicule automobile.

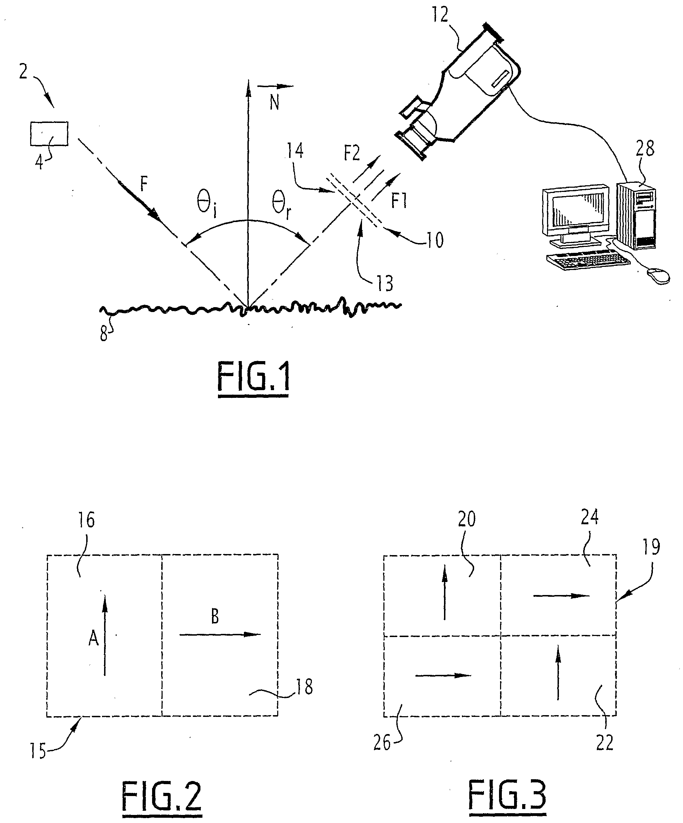

Un exemple du dispositif d'évaluation 2 est illustré schématiquement sur la figure 1.

Celui-ci comporte un émetteur 4 propre à émettre un faisceau lumineux F, en direction d'une surface 8 dont l'état de mouillage est à estimer, un polariseur 10 apte à polariser le faisceau lumineux F réfléchi par la surface 8, et une caméra 12 de réception du faisceau polarisé par le polariseur 10.

L'émetteur 4 est constitué par exemple par une diode électroluminescente, propre à émettre un faisceau F de lumière blanche naturelle présentant une luminance prédéfinie.

L'émetteur 4 et la caméra 12 sont disposés et fixés par rapport à la surface 8 de sorte que l'angle d'incidence $\Theta_I$ du faisceau F est sensiblement égal à l'angle de réflexion $\Theta_R$ du faisceau F réfléchi ; les angles $\Theta_I$ et $\Theta_R$ étant définis par rapport à une normale N au plan moyen de la surface 8. Ainsi, la réflexion du faisceau F est spéculaire.

De préférence, l'angle d'incidence $\Theta_I$ et l'angle de réflexion $\Theta_R$ sont égaux à 30°.

La surface à analyser 8 est une surface rugueuse apte à réfléchir au moins une partie du faisceau F.

Le polariseur 10 présente une zone 13 de polarisation rectiligne selon une première direction A et une zone 14 de polarisation rectiligne selon une seconde direction B, perpendiculaire à la première direction A.

Le polariseur 10 est disposé entre la surface 8 et la caméra 12 sur le trajet du faisceau F, de façon à le séparer en une première partie de faisceau F1 polarisé uniquement par la zone de polarisation 13 et une seconde partie de faisceau F2 distincte de la première partie de faisceau F1 et polarisé uniquement par la zone de polarisation 14.

En particulier, le polariseur 10 est fixé sur le trajet du faisceau réfléchi F de façon à ce que la partie F1 du faisceau soit sensiblement égale à la partie F2 du faisceau.

Le polariseur 10 est par exemple monté sur l'objectif de la caméra 12.

La caméra 12 est une caméra couleur ou noir et blanc, de type CCD. Elle est apte à créer une image numérique 15 du faisceau F réfléchi par la surface 8 et polarisé par le polariseur 10.

L'optique, la résolution de la caméra 12, ainsi que la distance entre la caméra et la surface 8 sont déterminées en fonction du degré de rugosité de la surface 8.

La caméra 12 est fixée par rapport au polariseur 10 de façon à ce que son objectif soit propre à recevoir la partie de faisceau F1 sur une moitié de son ouverture et la partie de faisceau F2 sur l'autre partie de son ouverture.

Comme le polariseur 10 comprend une zone de polarisation selon la direction A et une zone de polarisation selon la direction B, l'image 15 générée par la caméra 12 comprend une portion 16 correspondant à la partie F1 du faisceau F ayant traversé la zone 13 de polarisation selon la direction A et une portion 18 correspondant à la partie F2 du faisceau réfléchi F ayant traversé la zone 14 de polarisation selon la direction B, comme visible sur la figure 2.

La surface de la portion 16 de l'image est égale à la surface de la portion 18 de l'image car la caméra 12 est centrée sur l'axe de séparation entre les zones 13 et 14.

Le dispositif d'évaluation 2 comprend en outre un ordinateur 28 connecté à la caméra 12.

L'ordinateur 28 comprend des moyens de calcul, une interface homme/machine de type clavier ou souris et un écran d'affichage. Il est apte à traiter les images générées par la caméra selon le procédé d'évaluation décrit ci-après.

En variante, le polariseur 10 comprend deux zones de polarisation selon la direction A et deux zones de polarisation selon la direction B.

Dans ce cas, les zones de polarisation présentant la même direction de polarisation sont disposées de façon diagonale pour obtenir une répartition plus homogène de chaque zone polarisée selon une direction donnée. L'image 19 créée par la caméra 12 comporte quatre portions 20, 22, 24 et 26 correspondant au quatre zones du polariseur, comme visible sur la figure 3.

En variante, la caméra 12 est remplacée par un appareil photographique numérique ou par un photorécepteur associé à des moyens de détermination de l'énergie lumineuse polarisée selon chaque direction de polarisation.

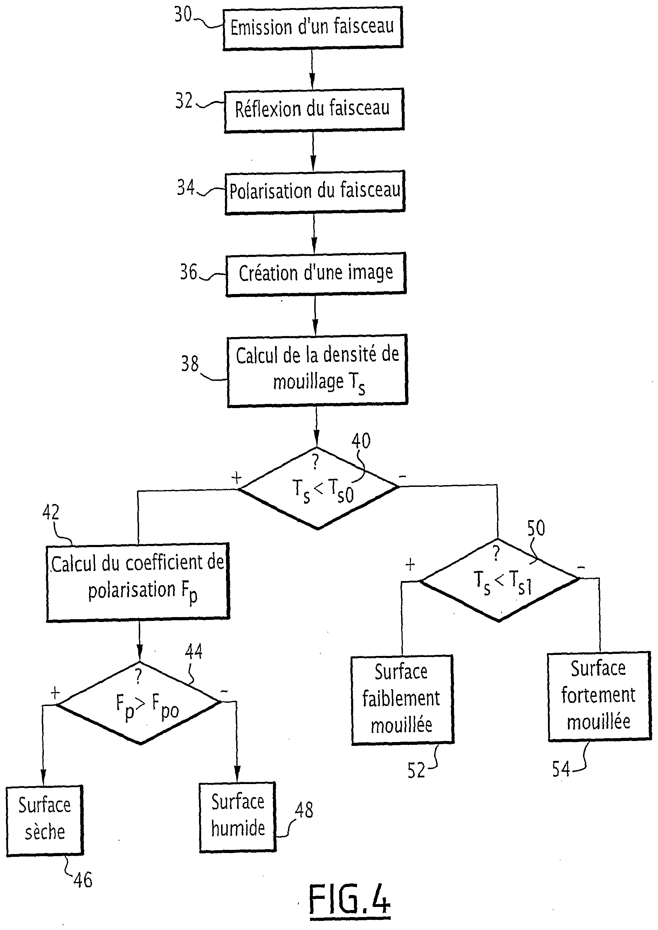

Comme visible sur la figure 4, le procédé d'évaluation de l'état de mouillage d'une surface débute par une étape 30 d'émission d'un faisceau F par l'émetteur 4.

A l'étape 32, le faisceau émis F est réfléchi par la surface 8 à évaluer.

A l'étape 34, le faisceau F réfléchi par la surface 8 traverse le polariseur 10. En particulier, la partie F1 du faisceau F traverse la zone 13 du polariseur et la partie F2 du faisceau F traverse la zone 14 du polariseur 10.

Au cours d'une étape 36, la caméra 12 prend une image numérique de la surface 8 et transmet cette image à l'ordinateur 28.

Au cours de l'étape 38, l'ordinateur 28 calcule la densité de mouillage de l'image 15 à partir de la formule suivante :

$$T_S = 100 \times \frac{N_A}{N_T} \qquad (1)$$

dans laquelle :

- $T_S$ est le degré de saturation des pixels ;
- $N_A$ est le nombre de pixels présentant un niveau de gris supérieur au seuil S ; et
- $N_T$ est le nombre total de pixels dans l'image 15.

Le seuil S correspond à un niveau de gris supérieur à environ 80% d'un niveau de blanc.

Le degré de saturation $T_S$ représente la densité de mouillage de la surface 8. Lorsque l'angle d'incidence $\Theta_I$ est égal à l'angle de réflexion $\Theta_R$, les surfaces mouillées présentent un degré de saturation $T_S$ élevé.

A l'étape 40, l'ordinateur 28 compare la densité de mouillage $T_S$ à un seuil de densité de mouillage primaire $T_{S0}$ préalablement défini au cours d'une phase de calibration. Le seuil de densité de mouillage primaire $T_{S0}$ dépend de la surface 8 et de la luminance du faisceau émis par l'émetteur 4.

Lorsque la densité de mouillage $T_S$ est inférieure au seuil de densité de mouillage $T_{S0}$, l'ordinateur 28 calcule le coefficient de polarisation $F_P$ de l'image 15, aussi appelé rapport de polarisation Fp, au cours d'une étape 42.

Le coefficient de polarisation Fp est déterminé à partir de la mesure du flux d'énergie moyen reçu par la caméra 12 selon chaque direction de polarisation à partir de la relation :

$$F_P = E_A / E_B \qquad (2)$$

dans laquelle :

- $E_A$ est le flux d'énergie moyen de la partie F1 du faisceau ayant traversé la zone 13 et présentant une polarisation selon la direction A ;
- $E_B$ est le flux d'énergie moyen de la partie F2 du faisceau ayant traversé la zone 14 du polariseur 10 et présentant une direction de polarisation B.

En pratique, l'ordinateur 28 calcule la moyenne des niveaux de gris des pixels de la portion 16 pour obtenir une grandeur proportionnelle au flux d'énergie moyen $E_A$ polarisé selon la direction A et la moyenne des niveaux de gris de la portion 18 de l'image 15 pour obtenir une grandeur proportionnelle au flux d'énergie moyen $E_B$ polarisé selon la direction B.

Au cours d'une étape 44, l'ordinateur 28 compare le coefficient de polarisation Fp à un seuil de polarisation $F_{P0}$ préalablement défini. Par exemple, le seuil de polarisation $F_{P0}$ est environ égal à 1.

Dans une réalisation telle que le seuil de polarisation $F_P$ décroisse lorsque le degré de mouillage augmente, l'ordinateur 28 indique sur son écran que la surface à évaluer 8 est sèche au cours d'une étape 46, lorsque le coefficient de polarisation $F_P$ est supérieur au seuil de polarisation $F_{P0}$.

Lorsque le coefficient de polarisation $F_P$ est inférieur au seuil de polarisation $F_{P0}$, l'ordinateur affiche à l'étape 48 que la surface 8 est humide.

Lorsque, à l'étape 40, la densité de mouillage $T_S$ est supérieure au seuil de densité de mouillage primaire $T_{S0}$, l'ordinateur compare la densité de mouillage $T_S$ au seuil de densité de mouillage secondaire $T_{S1}$ au cours d'une étape 50.

Lorsque la densité de mouillage $T_S$ est inférieure au seuil de densité de mouillage $T_{S1}$, l'ordinateur 28 affiche sur son écran que la surface 8 est faiblement mouillée au cours d'une étape 52.

Lorsque la densité de mouillage $T_S$ est supérieure au seuil de densité de mouillage secondaire $T_{S1}$, l'ordinateur 28 affiche sur son écran que la surface 8 est fortement mouillée au cours d'une étape 54.

En variante, le procédé détermine un degré de confiance de l'évaluation du degré de mouillage de la surface.

A cet effet, le procédé comprend une étape de calcul de la densité de mouillage $T_S$ dans chaque zone 16, 18 de l'image 14 et une étape de comparaison de la densité de mouillage calculée dans la partie 16 de l'image 14 à la densité de mouillage calculée dans la partie 18 de l'image 14.

Lorsque la différence entre ces densités de mouillage est inférieure à une valeur prédéfinie, la caméra a filmé une surface 8 de rugosité ou de mouillage homogène. L'ordinateur 28 affiche alors un indice caractéristique d'un bon niveau de confiance de l'évaluation du degré de mouillage.

Lorsque la différence entre ces densités de mouillage est supérieure à une valeur prédéfinie, la caméra a filmé une surface 8 de rugosité ou de mouillage non homogène. L'ordinateur 28 affiche un indice caractéristique d'un mauvais niveau de confiance de l'évaluation du degré de mouillage.

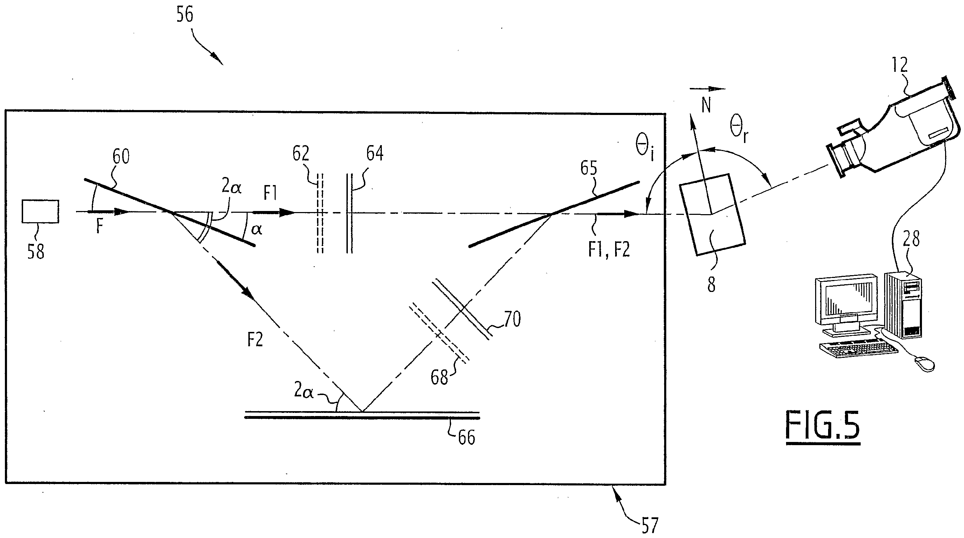

Le dispositif d'évaluation 56 selon un second mode de réalisation de l'invention est illustré schématiquement sur la figure 5.

Les éléments identiques aux éléments du dispositif d'évaluation 2 sont désignés par les mêmes références et ne seront pas décrits à nouveau.

Selon l'invention, le dispositif d'évaluation 56 comprend un émetteur 57 apte à émettre deux faisceaux vers la surface 8, une caméra 12 de réception des faisceaux F1, F2 et un ordinateur 28 relié à la caméra 12.

L'émetteur 57 est apte à émettre un premier faisceau F1 à polarisation rectiligne selon la direction A présentant une longueur d'onde au voisinage de $\lambda_1$ et un second faisceau F2 à polarisation rectiligne selon la direction B présentant une longueur d'onde au voisinage de $\lambda_2$.

A cet effet, l'émetteur 57 comprend une diode électroluminescente 58, une première lame mince semi réfléchissante 60 et un dispositif de collimation non représenté monté entre la diode électroluminescente 58 et la lame mince 60.

La diode électroluminescente 58 est apte à émettre un faisceau de lumière blanche F.

La première lame mince 60 est disposée le long du trajet du faisceau F. Elle forme un angle de $\alpha$ avec le faisceau F. Elle est apte à partager le faisceau en un premier faisceau F1 qui traverse la lame mince 60 et un second faisceau F2 dévié par celle-ci d'un angle de $2\alpha$.

L'émetteur 57 comporte en outre un polariseur 62 et un filtre séparateur 64 disposés sur le trajet du premier faisceau F1 ainsi qu'une seconde lame mince semi réfléchissante 65 disposée sur le trajet optique du premier F1 et du second F2 faisceaux de façon à ce que sa face principale présente un angle de $\alpha$ avec le premier et le second faisceaux.

Le polariseur 62 comprend une unique zone de polarisation propre à polariser le premier faisceau F1 selon la direction A.

Le filtre 64 est apte à filtrer les rayons de longueur d'onde différente de la longueur d'onde $\lambda_1$. La longueur d'onde $\lambda_1$ est voisine de 550 nm et correspond à un faisceau de couleur verte.

Le premier faisceau F1 est propre à traverser la lame semi réfléchissante 65. Le second faisceau F2 est propre à être dévié par la lame semi réfléchissante 65.

L'émetteur 57 comprend en outre un miroir à faces argentées 66, un polariseur 68 et un filtre séparateur 70 disposés entre le miroir 66 et la lame mince semi réfléchissante 65.

Le miroir 66 est positionné sur le trajet du second faisceau F2. Sa face principale présente un angle de $2\alpha$ par rapport au second faisceau F2, de sorte que le second faisceau est réfléchi vers la lame semi réfléchissante 65. Par exemple, l'angle $\alpha$ est voisin de 10°, lorsque les lames sont de simples lames de verre à faces parallèles.

Le polariseur 68 comprend une unique zone de polarisation propre à polariser le faisceau selon une direction de polarisation B perpendiculaire à la direction de polarisation A.

Le filtre 70 est apte à filtrer les rayons de longueur d'onde différente de la longueur d'onde $\lambda_2$. La longueur d'onde $\lambda_2$ est voisine de 650 nm et correspond à un faisceau de couleur rouge.

La caméra 12 est une caméra couleur.

La caméra 12 est fixée par rapport à l'émetteur 57 de façon à ce que l'angle d'incidence $\Theta_I$ du faisceau F soit égal à l'angle de réflexion $\Theta_R$ du faisceau F réfléchi. Les angles d'incidence et de réflexion sont mesurés par rapport à la normale N au plan moyen de la surface 8.

Selon l'invention, l'image obtenue comprend deux couleurs correspondant, l'une aux pixels de couleur verte excités par le premier faisceau F1 de longueur d'onde $\lambda_1$ et polarisé selon la direction A, et l'autre aux pixels de couleur rouge excités par le second faisceau F2 de longueur d'onde $\lambda_2$ et polarisé selon la direction B. Les pixels de couleurs rouge et verte sont répartis sur l'ensemble de l'image.

L'ordinateur 28 est apte à mettre en oeuvre le procédé d'évaluation tel que décrit précédemment et illustré sur la figure 4.

En particulier, l'ordinateur 28 est apte à calculer la densité de mouillage $T_S$ à partir de la formule énoncée en (1) dans laquelle $N_A$ est le nombre de pixels présentant un niveau de gris supérieur au seuil S, quelle que soit la couleur de ces pixels.

Pour calculer le coefficient de polarisation Fp, l'ordinateur 28 est propre à calculer la moyenne des niveaux de gris des pixels de couleur rouge afin d'obtenir le flux d'énergie moyen $E_A$ du faisceau F1 présentant la direction de polarisation A et la moyenne des niveaux de gris des pixels de couleur verte pour obtenir le flux d'énergie moyen $E_B$ du faisceau F2 présentant une direction de polarisation B.

A cet effet, l'ordinateur 28 est apte à distinguer à la fois les niveaux de gris d'une image et la chrominance de celle-ci.

Pour calculer le degré de confiance de l'évaluation de l'état de mouillage avec le dispositif d'évaluation 56 selon l'invention, l'ordinateur 28 est apte à calculer la densité de mouillage $T_S$ uniquement pour les pixels d'une couleur donnée et la densité de mouillage $T_S$ uniquement pour les pixels de l'autre couleur et à comparer ses deux densités de mouillage.

En variante, les filtres 70 et 64 présentent des couleurs différentes des couleurs verte et rouge.

En variante, la lame mince 60 est remplacée par l'utilisation d'une deuxième diode électroluminescente propre à émettre une lumière blanche.

En variante, les filtres vert 70 et rouge 64 et la diode 58 sont remplacés par deux diodes électroluminescentes propres à émettre une lumière verte et une lumière rouge.

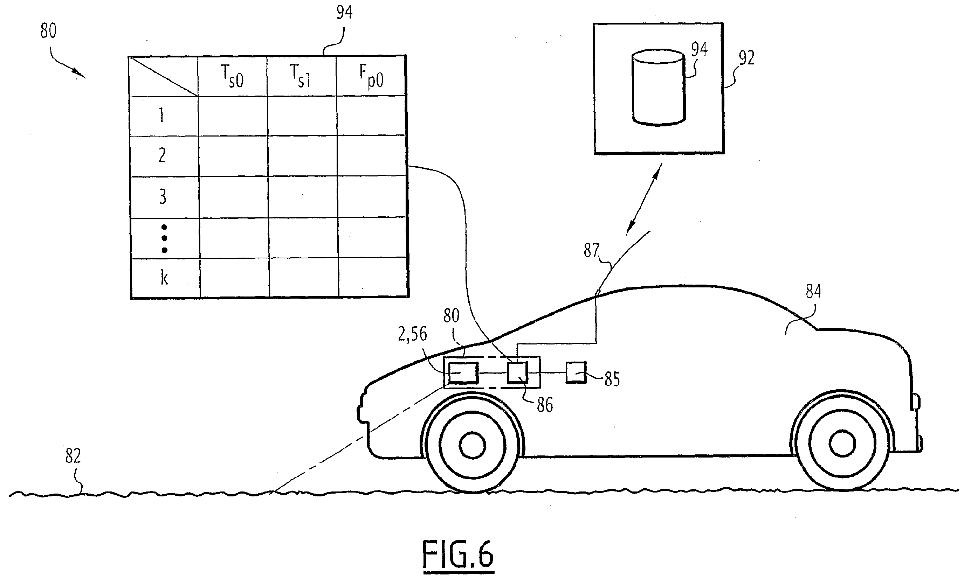

Le dispositif d'indication 80 de l'état de mouillage d'une route 82 est illustré schématiquement sur la figure 6.

Il est destiné à être monté sur un véhicule automobile 84 circulant sur la route 82 et comprenant un dispositif de navigation 85 et des moyens d'émission/réception 87.

Le dispositif d'indication 80 comporte un dispositif d'évaluation 2, 56, des moyens de commande 86 connectés au dispositif d'évaluation 2, 56, au dispositif de navigation 85 et aux moyens d'émission/réception 87.

Le dispositif d'évaluation 2, 56 est identique au dispositif d'évaluation de l'invention.

L'optique, la résolution et la distance entre la caméra et la route sont choisies de façon à ce que le dispositif d'évaluation soit propre à détecter l'état de mouillage d'une route 82 présentant des irrégularités de quelques millimètres à quelques centimètres.

Le dispositif d'évaluation 2, 56 est apte à recevoir des moyens de commande 56, un seuil de polarisation $F_{P0}$, un seuil de densité de mouillage primaire $T_{S0}$ et un seuil de densité de mouillage secondaire $T_{S1}$ à une fréquence prédéterminée et à modifier les valeurs de ses paramètres prédéfinis dans son procédé à chaque réception de nouvelles valeurs.

De façon connue en soi, le système de navigation 85 est propre à communiquer avec un serveur à distance, non représenté, pour recevoir la position géographique du véhicule 84.

Sur réception de cette information de localisation, les moyens de commande 86 sont aptes à transmettre à un serveur à distance 92 une demande de caractérisation du type de la route 82. La demande de caractérisation comporte la position géographique du véhicule 84 et par conséquent la position géographique de la route 82.

Le serveur à distance 92 comprend une base de données 94 propre à stocker des informations de localisation de la route et le type de la route en fonction de cette localisation. Par exemple, les routes peuvent être classées en différentes familles en fonction de leur date de réalisation, de leur composition ou de leur rugosité.

Le serveur 92 est apte à transmettre le type de la route aux moyens de commande 86 par l'intermédiaire des moyens de réception 87.

Les moyens de commande 86 sont aptes à recevoir le type de la route transmis par le serveur 92.

Les moyens de commande 86 comportent une cartographie 94 propre à définir un seuil de polarisation $F_{PO}$, un seuil de densité de mouillage primaire $T_{S0}$ et un seuil de densité de mouillage secondaire $T_{S1}$ pour chaque type de la route. Les valeurs de seuil de polarisation $F_{P0}$, de seuils de densité de mouillage primaire $T_{S0}$ et secondaire $T_{S1}$ de la cartographie 94 ont été préalablement établies pour chaque type de route au cours d'une phase d'apprentissage.

Les moyens de commande 86 sont propres à sélectionner dans la cartographie 94 le seuil de polarisation $F_{P0}$, le seuil de densité de mouillage primaire $T_{S0}$ et le seuil de densité de mouillage secondaire $T_{S1}$ en fonction du type de la route réceptionné par les moyens d'émission/réception 87.

Les moyens de commande 86 sont aptes à transmettre ces valeurs au dispositif d'évaluation 2, 56 à une fréquence préalablement établie.

Le dispositif d'évaluation 2, 56 est adapté pour prendre les valeurs reçues des moyens de commande 86 comme des valeurs prédéfinies pour la mise en oeuvre du procédé illustré sur la figure 4.

En variante, les lames 60, 65 sont semi réfléchissantes et l'angle α est de 45°.

Avantageusement, cette variante permet d'avoir un meilleur rendement lumineux des sources de lumière

Avantageusement, la mesure du coefficient de polarisation Fp permet de distinguer les routes sèches des routes humides. En effet, il est considéré qu'une surface est constituée d'un ensemble de micro-facettes et que lorsque l'angle d'incidence $\Theta_I$ est égal à l'angle de réflexion $\Theta_R$, chaque micro-facette a un comportement photométrique spéculaire lorsqu'elle est recouverte d'eau et un comportement photométrique diffus lorsqu'elle n'est pas recouverte d'eau.

Avantageusement, le dispositif d'évaluation selon l'invention comprend un unique moyen de réception de sorte que le dispositif ne présente pas de problème de parallaxe, c'est-à-dire qu'il n'est pas nécessaire de positionner exactement chaque caméra de réception d'un faisceau lumineux afin de pouvoir superposer exactement les images de ces caméras pour calculer le rapport de polarisation.

En variante, l'émetteur est une lampe propre à émettre un faisceau de lumière blanche pulsée de forte intensité telle que par exemple une lampe au xénon pulsée à une fréquence synchronisée avec le temps d'ouverture de la caméra, telle que par exemple une fréquence de 15 Hz.

Avantageusement, l'utilisation d'une telle lampe permet l'utilisation d'une caméra de faible sensibilité et donc de faible coût.

**Revendications**

1. Dispositif (56) d'évaluation de l'état de mouillage d'une surface (8), le dispositif (56) comportant au moins un émetteur 57 propre à émettre au moins un faisceau (F, F1, F2) lumineux incident en direction de la surface (8), ladite surface (8) étant apte à réfléchir au moins en partie ledit faisceau (F, F1, F2) et un moyen unique de réception (12) du faisceau (F, F1, F2) réfléchi par ladite surface (8), **caractérisé en ce qu'**il comprend en outre :

   - des moyens de polarisation 62, 68) comprenant au moins une première (62) et une seconde 68) zones de polarisation propres à polariser une première (F1) et une seconde (F2) parties du faisceau selon une première (A) et respectivement une seconde (B) directions de polarisation, la première (F1) et la seconde (F2) parties du faisceau présentant une première ($\lambda_1$) et respectivement une seconde ($\lambda_2$) longueurs d'onde, la seconde longueur d'onde ($\lambda_2$) étant différente de la première longueur d'onde ($\lambda_1$), les moyens de polarisation (62, 68) étant disposés entre l'émetteur et la surface à analyser (8) ; et

   - des moyens de calcul (28) aptes à calculer un rapport de polarisation ($F_P$) entre la polarisation de la première partie du faisceau réfléchi (F1) et la seconde partie du faisceau réfléchi (F2) pour évaluer l'état de mouillage de la surface (8).

2. Dispositif d'évaluation 56) selon la revendication 1, **caractérisé en ce que** la première zone de polarisation 62) est apte à polariser uniquement la première partie du faisceau (F1) et **en ce que** la seconde zone de polarisation 68) est apte à polariser uniquement la seconde partie du faisceau (F2).

3. Dispositif d'évaluation 56) selon l'une quelconque des revendications 1 et 2, **caractérisé en ce que** l'angle d'incidence ($\Theta_I$) du faisceau (F, F1, F2) incident est sensiblement égal à l'angle de réflexion ($\Theta_R$) du faisceau (F, F1, F2) réfléchi, l'angle d'incidence ($\Theta_I$) et l'angle de réflexion ($\Theta_R$) étant définis par rapport à la normale (N) au plan moyen de la surface à évaluer.

4. Dispositif d'évaluation 56) selon l'une quelconque des revendications 1 à 3, **caractérisé en ce que** le moyen de réception (12) comprend une première portion de réception de la première partie du faisceau (F1) et une seconde portion de réception de la seconde partie du faisceau (F2), et **en ce que** la taille de la première portion de réception est sensiblement égale à la taille de la seconde portion de réception.

5. Dispositif d'évaluation (2 ; 56) selon l'une quelconque des revendications 1 à 4, **caractérisé en ce que** la première direction de polarisation (A) est sensiblement perpendiculaire à la seconde direction de polarisation (B).

6. Dispositif d'évaluation (56) selon l'une quelconque des revendications 1 à 5, **caractérisé en ce que** le moyen de réception (12) comprend des moyens de création d'une image (15 ; 19) en couleur, ladite image (15 ; 19) comportant des pixels d'une première couleur aptes à être excités par la première partie du faisceau (F1) et des pixels d'une seconde couleur aptes à être excités par la seconde (F2) partie du faisceau, et **en ce que** le rapport de polarisation ($F_P$) est calculé à partir de la moyenne des niveaux de gris des pixels de la première couleur et la moyenne des niveaux de gris des pixels de la deuxième couleur.

7. Procédé d'évaluation de l'état de mouillage d'une surface (8) propre à réfléchir au moins une partie d'un faisceau lumineux incident (F, F1, F2), **caractérisé en ce qu'**elle comprend les étapes suivantes :

   - émission d'au moins un faisceau incident en direction de la surface à évaluer (8) par un émetteur 57 ;

- polarisation (34) d'au moins une première (F1) et une seconde parties du faisceau selon une première (A) et une seconde (B) directions de polarisation par au moins une première ; 62) et respectivement une seconde 68) zones de polarisation, la première (F1) et la seconde (F2) parties du faisceau présentant une première ($\lambda_1$) et respectivement une seconde ($\lambda_2$) longueurs d'onde, la seconde longueur d'onde ($\lambda_2$) étant différente de la première longueur d'onde ($\lambda_1$) ;

- réception (36) de la première (F1) et de la seconde (F2) parties du faisceau polarisé par un moyen unique de réception (12) ; et

- évaluation (38, 40, 42, 44, 50) de l'état de mouillage de la surface par le calcul (42) d'un rapport de polarisation ($F_P$) entre la polarisation de la première partie du faisceau réfléchi (F1) et la seconde partie du faisceau réfléchi (F2), par des moyens de calcul (28).

8. Procédé d'évaluation selon la revendication 7, **caractérisé en ce que** l'étape de réception (36) comprend une étape de création d'une image (15 ; 19) représentative de la première (F1) et de la seconde (F2) parties du faisceau polarisé, et **en ce que** l'étape d'évaluation (38, 40, 42, 44, 50) comporte les étapes suivantes :

- détermination (38) de la densité de mouillage (Ts) de la surface (8) par le calcul du degré de saturation de l'image (15 ; 19) ;
- comparaison (40) de la densité de mouillage (Ts) à au moins un seuil de densité de mouillage primaire prédéfini (Tso) ;
- si la densité de mouillage (Ts) est inférieure au seuil de densité de mouillage primaire ($T_{S0}$), comparaison (44) du rapport de polarisation ($F_P$) à un seuil de polarisation prédéfini ($F_{P0}$) ; et
- classification (46, 48) de la surface (8) comme une surface sèche lorsque le coefficient de polarisation ($F_P$) est supérieur au seuil de polarisation ($F_{P0}$) et comme une surface humide lorsque le coefficient de polarisation ($F_P$) est inférieur au seuil de polarisation ($F_{P0}$).

9. Procédé d'évaluation selon la revendication 8, **caractérisé en ce que** l'étape d'évaluation (38, 40, 42, 44, 50) comporte en outre les étapes suivantes :

- si la densité de mouillage (Ts) est supérieure au seuil de densité de mouillage primaire ($T_{S0}$), comparaison (50) de la densité de mouillage (Ts) à au moins un seuil de densité de mouillage secondaire ($T_{S1}$) ; et
- classification (52, 54) de la surface (8) comme une surface faiblement mouillée lorsque la densité de mouillage (Ts) est inférieure au seuil de densité de mouillage secondaire ($T_{S1}$) et comme une surface fortement mouillée lorsque la densité de mouillage (Ts) est supérieure au seuil de densité de mouillage secondaire ($T_{S1}$).

10. Dispositif d'indication (80) de l'état de mouillage d'une route (82) pour véhicule automobile (84) circulant sur cette route (82), le véhicule (84) comportant des moyens d'émission/réception (87), **caractérisé en ce qu'**il comporte :

- des moyens de commande (86) comportant :

- des moyens de connexion (86) aux moyens d'émission/réception (87) du véhicule pour transmettre une demande de caractérisation du type de la route (82) à un serveur à distance (92) et à réceptionner ledit type ;
- une cartographie (94) définissant des valeurs de seuils de polarisation ($F_{P0}$), de seuils de densité de mouillage primaire ($T_{S0}$) et de seuils de densité de mouillage secondaire ($T_{S1}$) en fonction de différents types de route ;
- des moyens de sélection (86) dans la cartographie (94) d'au moins une desdites valeurs en fonction du type de route réceptionné par les moyens d'émission/réception (87) ; et
- des moyens de transmission de la ou de chaque valeur sélectionnée à un dispositif d'évaluation (2 ; 56) ;

- un dispositif d'évaluation (2 ; 56) de l'état de mouillage selon l'une quelconque des revendications 1 à 6, le dispositif (2 ; 56) comprenant un seuil de polarisation ($F_{P0}$) prédéfini, un seuil de densité de mouillage primaire ($T_{S0}$) prédéfini et un seuil de densité de mouillage secondaire ($T_{S1}$) prédéfini, le dispositif (2 ; 56) étant propre à recevoir la ou chaque valeur sélectionnée par les moyens de commande (86), et à modifier la ou chaque valeur prédéfinie ($T_{S0}$, $T_{S1}$, $F_0$) par la ou chaque valeur reçue.

**Patentansprüche**

1. Vorrichtung (56) zur Beurteilung des Benetzungszustandes einer Oberfläche (8), wobei die Vorrichtung (56) mindestens einen Sender (57) zum Senden mindestens eines in Richtung der Oberfläche (8) einfallenden Lichtstrahls (F, F1, F2) umfasst, wobei die Oberfläche (8) dazu geeignet ist, den Strahl (F, F1, F2) mindestens teilweise zu reflektieren, sowie eine einzige Einrichtung (12) zum Empfang des durch die Oberfläche (8) reflektierten Strahls (F, F1, F2), **dadurch gekennzeichnet, dass** sie außerdem umfasst:

- Polarisationseinrichtungen (62, 68), umfassend mindestens einen ersten Polarisationsbereich (62) und einen zweiten Polarisationsbereich (68) zur Polarisation eines ersten Teils (F1) und eines zweiten Teils (F2) des Strahls entsprechend einer ersten (A) und jeweils einer zweiten (B) Polarisationsrichtung, wobei der erste Teil (F1) und der zweite Teil (F2) des Strahls eine erste ($\lambda_1$) und jeweils eine zweite ($\lambda_2$) Wellenlänge aufweisen, wobei die zweite Wellenlänge ($\lambda_2$) verschieden von der ersten Wellenlänge ($\lambda_1$) ist, wobei die Polarisationsmittel (62, 68) zwischen dem Sender und der zu analysierenden Oberfläche (8) angeordnet sind; und

- Berechnungsmittel (28), die dazu geeignet sind, ein Polarisationsverhältnis ($F_P$) zwischen der Polarisation des ersten Teils des reflektierten Strahls (F1) und des zweiten Teils des reflektierten Strahls (F2) zur Beurteilung des Benetzungszustandes der Oberfläche (8) zu berechnen.

2. Beurteilungsvorrichtung (56) nach Anspruch 1, **dadurch gekennzeichnet, dass** der erste Polarisationsbereich (62) dazu geeignet ist, ausschließlich den ersten Teil des Strahls (F1) zu polarisieren, und dadurch, dass der zweite Polarisationsbereich (68) dazu geeignet ist, ausschließlich den zweiten Teil des Strahls (F2) zu polarisieren.

3. Beurteilungsvorrichtung (56) nach einem der Ansprüche 1 und 2, **dadurch gekennzeichnet, dass** der Einfallswinkel ($\theta_I$) des einfallenden Strahls (F, F1, F2) im Wesentlichen gleich dem Reflexionswinkel ($\theta_R$) des reflektierten Strahls (F, F1, F2) ist, wobei der Einfallswinkel ($\theta_I$) und der Reflexionswinkel ($\theta_R$) gegenüber der Normale (N) an der mittleren Ebene der zu analysierenden Oberfläche bestimmt werden.

4. Beurteilungsvorrichtung (56) nach einem der Ansprüche 1 bis 3, **dadurch gekennzeichnet, dass** die Empfangseinrichtung (12) einen ersten Empfangsabschnitt für den ersten Teil des Strahls (F1) und einen zweiten Empfangsabschnitt für den zweiten Teil des Strahls (F2) umfasst, und dadurch, dass die Größe des ersten Empfangsabschnitts im Wesentlichen gleich der Größe des zweiten Empfangsabschnitts ist.

5. Beurteilungsvorrichtung (2, 56) nach einem der Ansprüche 1 bis 4, **dadurch gekennzeichnet, dass** die erste Polarisationsrichtung (A) im Wesentlichen senkrecht zu der zweiten Polarisationsrichtung (B) verläuft.

6. Beurteilungsvorrichtung (56) nach einem der Ansprüche 1 bis 5, **dadurch gekennzeichnet, dass** die Empfangseinrichtung (12) Einrichtungen zur Erzeugung eines Farbbildes (15, 19) umfasst, wobei das Bild (15, 19) Pixel einer ersten Farbe umfasst, welche durch den ersten Teil des Strahls (F1) erregbar sind, und Pixel einer zweiten Farbe, welche durch den zweiten Teil des Strahls (F2) erregbar sind, und dadurch, dass das Polarisationsverhältnis ($F_P$) anhand des Mittelwerts der Graustufen der Pixel der ersten Farbe und des Mittelwerts der Graustufen der Pixel der zweiten Farbe berechnet wird.

7. Verfahren zur Beurteilung des Benetzungszustandes einer Oberfläche (8), die mindestens einen Teil eines einfallenden Lichtstrahls (F, F1, F2) reflektieren kann, **dadurch gekennzeichnet, dass** es folgende Schritte umfasst:

- Ausstrahlung mindestens eines in Richtung der zu analysierenden Oberfläche (8) einfallenden Strahls durch einen Sender (57);
- Polarisation (34) mindestens eines ersten Teils (F1) und eines zweiten Teils des Strahls entsprechend einer ersten (A) und einer zweiten (B) Polarisationsrichtung durch mindestens einen ersten Polarisationsbereich (62) und jeweils einen zweiten Polarisationsbereich (68), wobei der erste Teil (F1) und der zweite Teil (F2) des Strahls eine erste ($\lambda_1$) und jeweils eine zweite ($\lambda_2$) Wellenlänge aufweisen, wobei die zweite Wellenlänge ($\lambda_2$) verschieden von der ersten Wellenlänge ($\lambda_1$) ist;
- Empfang (36) des ersten (F1) und des zweiten (F2) Teils des polarisierten Strahls durch eine einzige Empfangsvorrichtung (12); und
- Beurteilung (38, 40, 42, 44, 50) des Benetzungszustandes der Oberfläche durch die Berechnung (42) eines Polarisationsverhältnisses (Fp) zwischen der Polarisation des ersten Teils des reflektierten Strahls (F1) und des zweiten Teils des reflektierten Strahls (F2) mittels Berechnungseinrichtungen (28).

8. Beurteilungsverfahren nach Anspruch 7, **dadurch gekennzeichnet, dass** der Empfangsschritt (36) einen Schritt zur Erzeugung eines Bildes (15, 19) als Darstellung des ersten (F1) und des zweiten (F2) Teils des polarisierten Strahls umfasst, und dadurch, dass der Beurteilungsschritt (38, 40, 42, 44, 50) die folgenden Schritte umfasst:

- Bestimmung (38) der Benetzungsdichte ($T_S$) der Oberfläche (8) durch die Berechnung des Sättigungsgrads des Bildes (15, 19);
- Vergleich (40) der Benetzungsdichte ($T_S$) mit mindestens einem primären, vordefinierten Grenzwert der Benetzungsdichte ($T_{S0}$);

- wenn die Benetzungsdichte ($T_S$) unter dem primären Grenzwert der Benetzungsdichte ($T_{S0}$) liegt, Vergleich (44) des Polarisationsverhältnisses ($F_P$) mit einem vordefinierten Polarisationsgrenzwert ($F_{P0}$); und

- Einstufung (46, 48) der Oberfläche (8) als trockene Oberfläche, wenn der Polarisationskoeffizient ($F_P$) höher als der Polarisationsgrenzwert ($F_{P0}$) ist, und als feuchte Oberfläche, wenn der Polarisationskoeffizient ($F_P$) kleiner als der Polarisationsgrenzwert ($F_{P0}$) ist.

9. Beurteilungsverfahren nach Anspruch 8, **dadurch gekennzeichnet, dass** der Beurteilungsschritt (38, 40, 42, 44, 50) außerdem die folgenden Schritte umfasst:

   - wenn die Benetzungsdichte ($T_S$) größer als der primäre Grenzwert der Benetzungsdichte ($T_{S0}$) ist, Vergleich (50) der Benetzungsdichte ($T_S$) mit mindestens einem sekundären Grenzwert der Benetzungsdichte ($T_{S1}$); und

   - Einstufung (52, 54) der Oberfläche (8) als eine schwach benetzte Oberfläche, wenn die Benetzungsdichte ($T_S$) kleiner als der Grenzwert der sekundären Benetzungsdichte ($T_{S1}$) ist, und als stark benetzte Oberfläche, wenn die Benetzungsdichte ($T_S$) größer als der Grenzwert der sekundären Benetzungsdichte ($T_{S1}$) ist.

10. Vorrichtung zur Anzeige (80) des Benetzungszustandes einer Straße (82) für auf dieser Straße (82) fahrendes Kraftfahrzeug (84), wobei das Kraftfahrzeug (84) Sende-/Empfangseinrichtungen (87) umfasst, **dadurch gekennzeichnet, dass** sie umfasst:

    - Steuerungseinrichtungen (86), umfassend:

      - Einrichtungen (86) zur Verbindung mit den Sende-/Empfangseinrichtungen (87) des Fahrzeugs zur Übermittlung einer Anfrage zur Charakterisierung des Typs der Straße (82) an einen Fernserver (92) und zum Empfangen des Typs;

      - eine Kartographie (94), welche Werte für Polarisationsgrenzwerte ($F_{P0}$), für Grenzwerte der primären Benetzungsdichte ($T_{S0}$) und für Grenzwerte der sekundären Benetzungsdichte ($T_{S1}$) in Abhängigkeit verschiedener Straßentypen bestimmt;

      - Einrichtungen (86) zur Auswahl mindestens eines der Werte aus der Kartographie (94) in Abhängigkeit des durch die Sende-/Empfangseinrichtungen (87) empfangenen Straßentyps; und

      - Einrichtungen zur Übermittlung des oder jedes gewählten Werts an eine Beurteilungsvorrichtung (2; 56);

    - eine Vorrichtung (2; 56) zur Beurteilung des Benetzungszustandes nach einem der Ansprüche 1 bis 6, wobei die Vorrichtung (2; 56) einen vordefinierten Polarisationsgrenzwert ($F_{P0}$), einen vordefinierten, primären Grenzwert der Benetzungsdichte ($T_{S0}$) und einen vordefinierten, sekundären Grenzwert der Benetzungsdichte ($T_{S1}$) umfasst, wobei die Vorrichtung (2; 56) den oder jeden, durch die Steuerungseinrichtungen (86) ausgewählten Wert empfangen und den oder jeden, durch den oder jeden empfangenen Wert vordefinierten Wert ($T_{S0}$, $T_{S1}$, $F_0$) ändern kann.

## Claims

1. A device (56) for evaluating the state of wetting of a surface (8), the device (56) comprising at least one emitter (57) able to emit at least one light beam (F, F1, F2) which is incident in the direction of the surface (8), the said surface (8) being able to at least partly reflect the said beam (F, F1, F2) and a single means (12) for receiving the beam (F, F1, F2) reflected by the said surface (8), **characterised in that** it further comprises :

   - polarisation means (62, 68) comprising at least one first polarisation zone (62) and one second polarisation zone (68) capable of polarising a first part (F1) and a second part (F2) of the beam in a first polarisation direction (A) and a second polarisation direction (B) respectively, the first part (F1) and the second part (F2) of the beam having a first wavelength ($\lambda_1$) and a second wavelength ($\lambda_2$) respectively, the second wavelength ($\lambda_2$) being different from the first wavelength ($\lambda_1$), the polarisation means (62, 68) being located between the emitter and the surface under analysis (8), and

   - calculation means (28) capable of calculating a polarisation ratio ($F_P$) between the polarisations of the first part of the reflected beam (F1) and the second part of the reflected beam (F2) in order to evaluate the state of wetting of the surface (8).

2. The evaluation device (56) according to Claim 1, **characterised in that** the first polarisation zone (62) is capable of polarising only the first part of the beam (F1) and **in that** the second polarisation zone (68) is capable of polarising only the second part of the beam (F2).

3. The evaluation device (56) according to either of Claims 1 and 2, **characterised in that** the angle of incidence ($\Theta_I$) of the incident beam (F, F1, F2) is substantially equal to the angle of reflection ($\Theta_R$) of the reflected beam (F, F1, F2), the angle of incidence ($\Theta_I$) and the angle of reflection ($\Theta_R$) being defined in relation to the normal (N) to the mean plane of the surface requiring evaluation.

4. The evaluation device (56) according to any one of Claims 1 to 3, **characterised in that** the receiving means (12) comprise a first portion receiving the first part of the beam (F1) and a second portion receiving the second part of the beam (F2), and **in that** the size of the first receiving portion is substantially equal to the size of the second receiving portion.

5. The evaluation device (56) according to any one of Claims 1 to 4, **characterised in that** the first polarisation direction (A) is substantially perpendicular to the second polarisation direction (B).

6. The evaluation device (56) according to any one of Claims 1 to 5, **characterised in that** the receiving means (12) comprise means for creating an image (15 ; 19) in colour, said image (15 ; 19) comprising pixels of a first colour capable of being excited by the first part of the beam (F1) and pixels of a second colour capable of being excited by the second part of the beam (F2), and **in that** the polarisation ratio ($F_P$) is calculated from the mean of the grey levels of the pixels of the first colour and the mean of the grey levels of the pixels of the second colour.

7. A method for evaluating the state of wetting of a surface (8) capable of reflecting at least a part of an incident light beam (F, F1, F2) **characterised in that** it comprises the following steps :

   - emission of at least one incident beam in the direction of the surface requiring evaluation (8) by an emitter (57),
   - polarisation (34) of at least a first part (F1) and a second part of the beam in a first polarisation direction (A) and a second polarisation direction (B) by at least a first polarisation zone (62) and a second polarisation zone (68) respectively, the first part (F1) and the second part (F2) of the beam having a first wavelength ($\lambda_1$) and a second wavelength ($\lambda_2$) respectively, the second wavelength ($\lambda_2$) being different from the first wavelength ($\lambda_1$),
   - receipt (36) of the first part (F1) and the second part (F2) of the beam polarised by a single receiving means (12), and
   - evaluation (38, 40, 42, 44, 50) of the state of wetting of the surface by calculating (42) a polarisation ratio ($F_P$) between the polarisation of the first part of the reflected beam (F1) and the second part of the reflected beam (F2) by calculation means (28).

8. The method of evaluation according to Claim 7, **characterised in that** the receiving stage (36) comprises a stage of creating an image (15 ; 19) representing the first part (F1) and the second part (F2) of the polarised beam, and **in that** the evaluation stage (38, 40, 42, 44, 50) comprises the following stages :

   - determining (38) of the wetting density ($T_S$) of the surface (8) by calculating the degree of saturation of the image (15 ; 19),
   - comparing (40) the wetting density ($T_S$) with at least one predetermined primary wetting density threshold ($T_{S0}$),
   - if the wetting density ($T_S$) is below the primary wetting density threshold ($T_{S0}$), comparing (44) the polarisation ratio ($F_P$) with a predetermined polarisation threshold ($F_{P0}$), and
   - classifying (46, 48) the surface (8) as a dry surface when the polarisation coefficient ($F_P$) is above the polarisation threshold ($F_{P0}$) and as a wet surface when the polarisation coefficient ($F_P$) is below the polarisation threshold ($F_{P0}$).

9. The method of evaluation according to Claim 8, **characterised in that** the evaluation step (38, 40, 42, 44, 50) further comprises the following steps :

   - if the wetting density ($T_S$) is above the primary wetting density threshold ($T_{S0}$), comparing (50) the wetting density ($T_S$) with at least one secondary wetting density threshold ($T_{S1}$), and
   - classifying (52, 54) the surface (8) as a slightly wetted surface when the wetting density ($T_S$) is below the secondary wetting density threshold ($T_{S1}$) and as a heavily wetted surface when the wetting density ($T_S$) is above the secondary wetting density threshold ($T_{S1}$).

10. A device (80) for indicating the state of wetting of a road (82) for a motor vehicle (84) travelling on that road (82), the vehicle (84) incorporating emission/receiving means (87), **characterised in that** it comprises :

   - control means (86) comprising :

      - means (86) for connection to the vehicle's emission/receiving means (87) to transmit a request for characterisation of the road type (82) to a remote server (92) and to receive the said type,
      - a mapping (94) defining polarisation threshold values ($F_{P0}$), primary wetting density thresholds ($T_{S0}$) and secondary wetting density thresholds ($T_{S1}$) on the basis of different road types,
- means (86) for selecting at least one of the said values from the mapping (94) according to the road type received by the emission/receiving means (87), and
- means for transmitting the selected value or each selected value to an evaluation device (2 ; 56) ;

- a device (2 ; 56) for evaluating the state of wetting according to any one of Claims 1 to 9, the device (2 ; 56) comprising a predetermined polarisation threshold ($F_{P0}$), a predetermined primary wetting density threshold ($T_{S0}$) and a predetermined secondary wetting density threshold ($T_{S1}$), the device (2 ; 56) being capable of receiving the value or each value selected by the control means (86), and of modifying the predetermined value or each predetermined value ($T_{S0}$, $T_{S1}$, $F_0$) by the value or each value received.

**FIG.1**

**FIG.2**

**FIG.3**

**30** — Emission d'un faisceau

**32** — Réflexion du faisceau

**34** — Polarisation du faisceau

**36** — Création d'une image

**38** — Calcul de la densité de mouillage $T_s$

**40** — ? $T_s < T_{s0}$

**42** — Calcul du coefficient de polarisation $F_p$

**44** — ? $F_p > F_{po}$

Surface sèche — **46**

Surface humide — **48**

**50** — ? $T_s < T_{s1}$

Surface faiblement mouillée — **52**

Surface fortement mouillée — **54**

FIG.4

FIG.5

EP 2 038 638 B1

14

| | $T_{s0}$ | $T_{s1}$ | $F_{p0}$ |
|---|---|---|---|
| 1 | | | |
| 2 | | | |
| 3 | | | |
| ⋮ | | | |
| k | | | |

**FIG.6**

EP 2 038 638 B1